Europäisches Patentamt

European Patent Office

Office européen des brevets

(11) Publication number: **0 032 013**
**B1**

(12) **EUROPEAN PATENT SPECIFICATION**

(45) Date of publication of patent specification: **12.04.89**

(51) Int. Cl.⁴: **G 06 F 3/02**

(21) Application number: **80304526.9**

(22) Date of filing: **15.12.80**

(54) Writing pad for character recognition apparatus.

(30) Priority: **20.12.79 GB 7943987**
**31.10.80 GB 8035115**

(43) Date of publication of application:
**15.07.81 Bulletin 81/28**

(45) Publication of the grant of the patent:
**12.04.89 Bulletin 89/15**

(84) Designated Contracting States:
**AT BE CH DE FR GB IT LI LU NL SE**

(56) References cited:
**US-A-3 591 718**
**US-A-3 798 370**
**US-A-3 959 585**
**US-A-4 079 194**
**US-A-4 178 481**

**IBM TECHNICAL DISCLOSURE BULLETIN, vol.
17, no. 7, December 1974, New York, US, C.P.
LUDEMAN: "Keyboard employing voltage
distribution matrix position sensor", pp. 2015-
2017**

**PATTERN RECOGNITION, vol. 8, no. 2, April
1976, New York, US, HANAKI et al., "An on-line
character recognition aimed at a substitution
for a billing machine keyboard", pp. 63-71**

(73) Proprietor: **MOORE BUSINESS FORMS, INC.
300 Lang Boulevard
Grand Island New York 14072-1697 (US)**

(72) Inventor: **Lukis, Lawrence Joseph
3, Rous Road
Buckhurst Hill Essex (GB)**
Inventor: **Ezekiel, Maurice
37, Beattyville Gardens
Barkingside Ilford Essex (GB)**

(74) Representative: **Townsend, Derek Thomas
Spence & Townsend Mill House Wandle Road
Beddington
Croydon Surrey CR0 4SD (GB)**

(56) References cited:
**IEEE TRANSACTIONS ON SYSTEMS, MAN
AND CYBERNETICS, vol. Snc 6, no. 2, February
1976, New York, US, IMPEDOVO et al. "Real-
time recognition of handwritten numerals", pp.
145-148**

Courier Press, Leamington Spa, England.

## Description

This invention has reference to a writing pad for character recognition apparatus, more particularly to such character recognition apparatus which is utilised to recognise characters as the characters are written by hand.

A writing pad according to the preamble of claim 1 is known from US Specification 4 079 194. This describes a data entry pad for entering graphical data into data processing and communication systems including a rectangular writing surface area of moderate resistance material surrounded by high resistance border areas.

In USA Specification No 3 798 370 there is described an electrographic sensor having a single sheet of resistive material with electrodes arranged along each edge connected to a series arrangement of fixed discrete resistors to assist in the establishment of uniform electrical gradients. USA Specification No 3 591 718 describes a graphical input tablet with a tablet conducting sheet comprising a layer of high resistivity surrounded by a border of lower resistivity with corner connecting terminals and surrounded by resistive strips.

Likewise USA Specification No 4 178 481 describes a writing grid area with peripheral resistive connecting portions and surrounding conductive pattern areas.

It is an object of the present invention to provide an improved writing pad for use in character recognition apparatus.

It is a further object of the present invention to provide an improved writing pad with a means for adjusting the effective resistance of the border to improve the linearity of the voltage gradient across the two main dimensions of the high resistivity layer.

Accordingly the present invention provides a writing pad for character recognition apparatus comprising a highly resistive layer and a conductive layer separated from one another by a cushion sheet of insulating material but which layers can be brought into electrical contact with each other under writing pressure by a writing implement upon the writing pad, wherein the high resistivity layer is surrounded by and connected to a continuous border of different resistivity, a plurality of connector areas of low resistivity serving to connect the border to an external switching circuit, characterised in that the resistivity of the continuous border is lower than that of the high resistivity layer and in that a plurality of further areas of high resistivity are disposed around the border, these areas of high resistivity being so selectively connected to the border and having such resistance values that the voltage gradients along the length and the width of the high resistivity layer are substantially linear.

A writing pad for use in character recognition apparatus in accordance with the present invention will now be described by way of example with reference to the following drawings wherein:

Fig 1. is a diagrammatic cross-sectional view of the writing pad taken on the line 1—1 of Fig 2:

Fig 2. is a plan view of the lowermost sheet of the writing pad:

Fig 3. is a view similar to Fig 2 not including a resistive coating;

Fig 4. is a circuit diagram

Fig 5. shows a modification of Fig 4:

Fig 6. is a further circuit diagram for the writing pad and

Fig 7. is a diagrammatic view of part of an alternative arrangement of the writing pad.

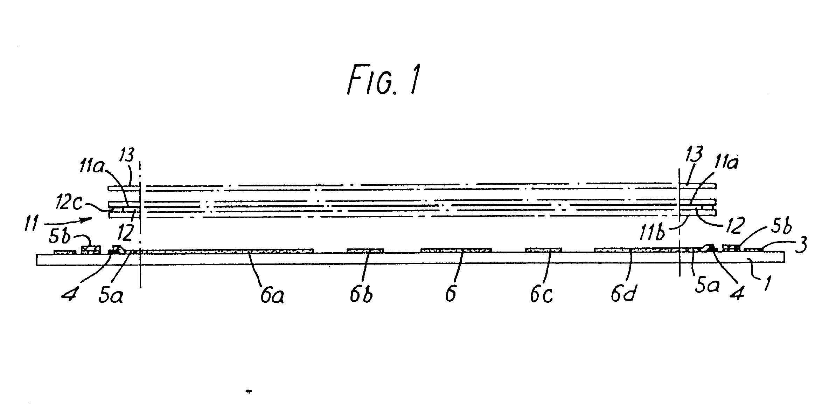

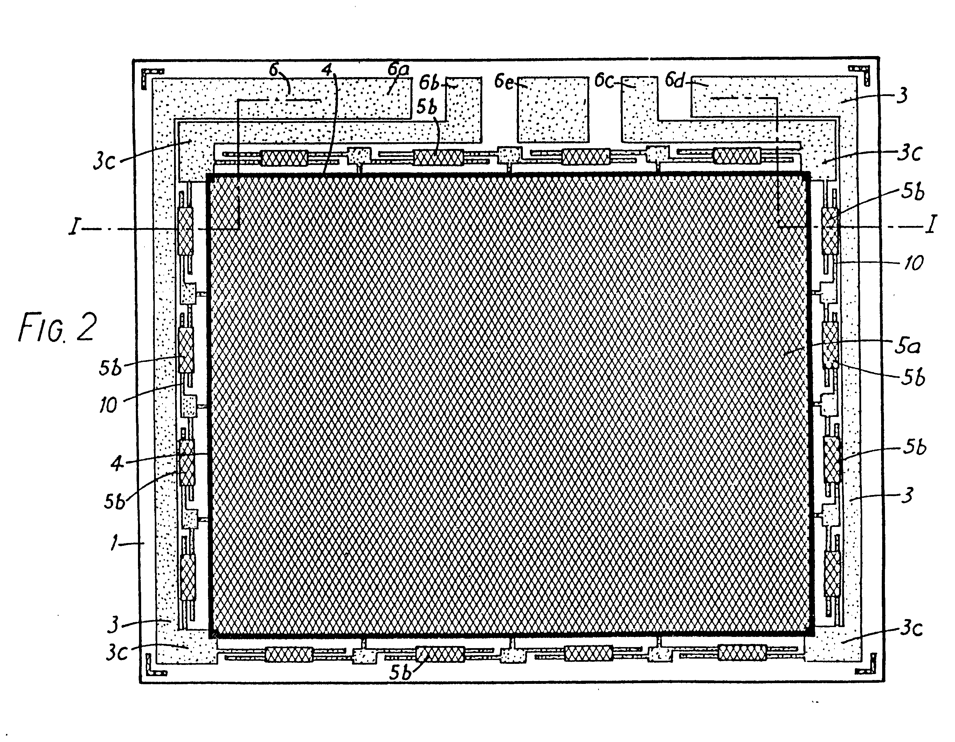

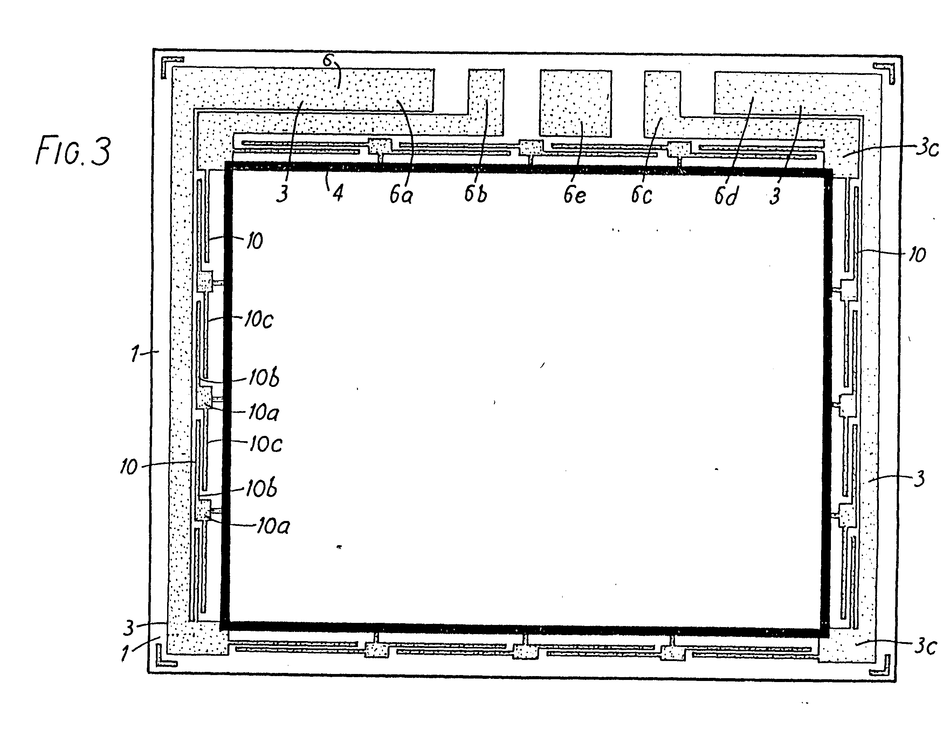

Referring to the drawings, there is shown in Figs. 1 and 2 a writing pad including a rigid base board 1 of non conducting material (such as that which is usually used as base for printed circuit boards, for example the material known as fibreglass) which serves as the mechanical supporting part of the writing pad. A layer of conductive connector material 3 is printed on the base board 1. The material of the conductive connector layer is applied in the form of an etched copper layer similar to that used on printed circuit boards or may be applied as an ink which embodies silver particles to provide a coating having resistance of about 0.01 ohms per square area (and hereinafter referred to as a low resistance). The conductive connector coatings serve to connect the medium resistance border 4 (to be hereinafter described) to printed connectors 6 at the top edge as shown in Figs. 2 and 3 and thereby to an external electric circuit.

Printed on the board 1 substantially within the low resistance conductive connector layer 3 is a medium resistance border layer 4 which extends completely around the periphery of a higher resistance coating layer 5a (to be hereinafter described). The medium resistance border layer 4 overlaps the low resistance layer 3 at the corners thereof. The medium resistance border layer has a width of between eight hundredths and thirteen hundredths of a centimeter (.08 to .13cm) and may be printed from ink embodying a mixture of silver and carbon particles to give a resistance of the order of one ohm per square area. This medium resistance area is shown in black on Figs. 2 and 3 of the drawings.

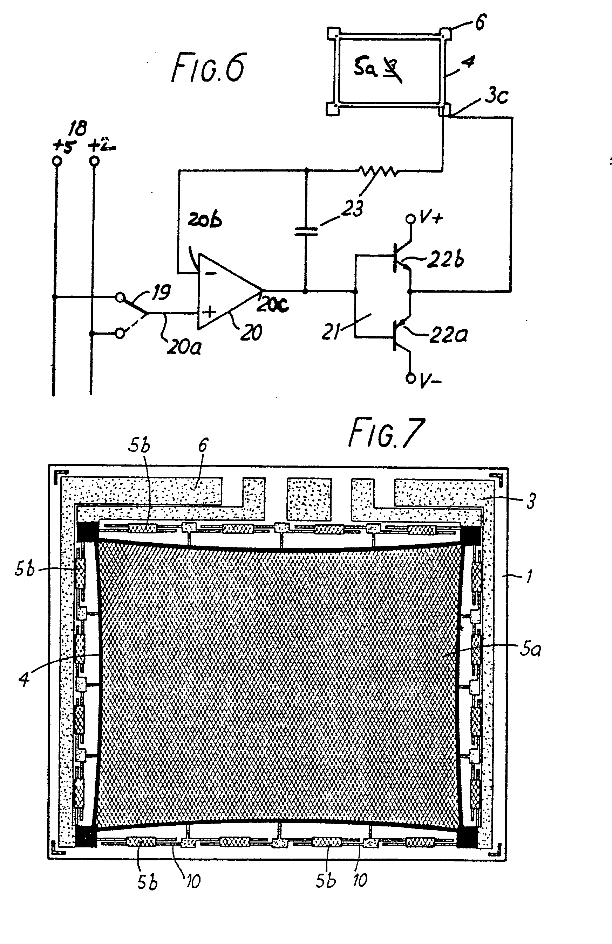

A higher resistance coating 5a, 5b shown in cross-hatching is printed on the board, as shown in FIG 2 but not in FIG 3. The main part of the high resistance coating layer comprises a main rectangular part 5a lying within the border layer 4 but partially overlying the border layer 4. The other part 5b of the high resistance coating layer, also shown in Fig 7 of the drawings in cross hatching, comprises a plurality of tuning rectangular parts 5b arranged outside the border layer 4 and which serve to correct for inaccuracies in the coating layer particularly near the border and to give to the coating layer 5a the property of linear drop in voltage when appropriately driven.

The coating 5a, 5b which has a resistance of about 1000 ohms per square area may be printed from an ink having conducting material (preferably carbon and/or silver) and a resin, a plasticizer and a solvent. This coating has a thickness of about 0.0025 cms. In order to protect the coating 5a, 5b from being scratched during transit or when being loaded into or unloaded from the character recognition apparatus the layer 5a, 5b may comprise a first layer having a resistance of about 100,000 ohms per square. The coating is similar in constitution to the main coating 5a, 5b but contains a smaller proportion of conducting material and has a thickness of less than 0.0025 cms.

The low resistance conductive connector layer 3 includes a series of connector areas 6 (including areas 6a, 6b, 6c, 6d) arrranged at the top edge of the writing pad as shown in Fig 2, for connection to an external circuit. Each of the connector areas 6a, 6b, 6c, and 6d, is connected to a respective one of four areas 3c located adjacent the corners of the high resistance area 5a. Additional areas of the conductive connector coating 3 are provided in the form of a series of extension lines 10 (Fig 3) extending outwardly from one of the respective corner areas 3c and from beneath the medium resistance border layer 4. These extension lines 10 like the remainder of the low resistance layer 3 are printed to form part of the low resistance layer 3 and are of the same material as that layer. The extension lines 10 each consist of a rectangular part 10a with one line 10b extending from the rectangular part 10a in one direction, a second line 10c extending from the rectangular part 10a but in the opposite direction and a further part extending at right angles to parts 10b, 10c connected to the border 4. Each outer line 10b extends parallel to and outwardly of the line 10c extending from the next adjacent part 10a. The extension lines 10b, 10c are overlaid by the tuning rectangular parts 5b which form part of the high resistance coating. Extension lines 10b, 10c are intended to be used to ensure that with the selective adjustments to the resistivity of the border areas 4 and the extension lines 10b, 10c serves to modify the resistivity of the resistive part 5a to correct any errors due to variations in the coating and thus the voltage gradient across the pad is linear when connected in an electrical circuit. This is achieved by removing material from the parts 5b which fall between the adjacent lines 10b, 10c parallel with one another or if appropriate removing part of a line 10b or 10c to place the tuning rectangular part 5b on open circuit.

The material of the layer of which the rectangular parts 5b are formed is of a high resistance so the removal of a part of the material layer varies the resistance between the adjacent lines 10b, 10c and hence adjusts and corrects the effective resistance of the border line 4 to render the voltage gradient across the pad to be linear.

Each one of the resistive layer 5 and the border layer 4 are formed by screen printing on the sheet 2. The layers have a thickness of about 0.0025 cms or even less.

Positioned above the resistive layer 5 and separate therefrom is an easily replaceable cushion layer positioned in the area where writing pressure is applied. This cushion layer 11 is intended to prevent an electrical circuit being made when the operator's hand rests on the writing surface and consists of two leaf layers 11a, 11b of normally electrically insulating material and between which leaf layers there is provided a layer 12 of a dielectric nonconductive elastomeric gel material.

A suitable gel material is that supplied by Dow Corning under the Trade Mark SYLGARD Q3—6527. This material is supplied in two parts and we find that a mixture of the two parts of Part A/Part B in the range of 1.65/1 to 1/1 is suitable. The gel layer has a thickness of between 0.013 cms to 0.13 cms and preferably between 0.025 cms and 0.030 cms.

Alternatively, the elastomer gel material layer may be the material sold under the Trade Mark DYNACON and is described in the specification of US Patent Nos. 4,054,540 and 4,120,828. The DYNACON layer is of normally high resistance material between the outer surface of the coating and the backing sheet but when pressure is applied at a point on the surface of the pressure sensitive layer by a writing implement such as a pencil or a ball-point pen, then a resistance of that layer in the area to which pressure is applied is substantially reduced.

The upper leaf layer 11a is a polymeric film coated or treated on the side adjacent the elastomeric gel material with conductive material of low electrical resistance typically less than 1,000 ohms per square. This may comprise metallised film or a conductive ink coating on the film and preferably comprises a conductive ink which is screen printed onto the lower face of the flexible sheet 11a. The conductive material in this layer is connected by an integral electric connection through the conductive material to voltage measuring means.

The said lower leaf 11b is a volume conductive film having a low electrical resistance through the film and a high electrical resistance across the film. The ratio of through resistance to across resistance should be less than 1/100. It is also required that the resistance through the film should be less than 10.000 ohms per square and the resistance across the film should be greater than 50,000 ohms per square. Such a material may be a filled polymeric film containing conductive material such as carbon such as sold under the Trade Mark Velostat by the 3Ms' Company or may consist of an elastomeric film such as silicone film containing finely dispersed nickel particles.

The upper leaf layer 11a and the lower leaf layer 11b are welded together as by heat sealing 12c at their margins to contain the elastomeric material between the sheets. As shown a further protective flexible sheet 13 is provided over the conductive leaf layer 11 and may comprise a polyester film sheet having a thickness of about 0.0025 cms.

An electrical connection is made between the layer 11a and an electrical circuit external of the writing pad. This connection is made through the area 6e adjacent the areas 6b, 6c.

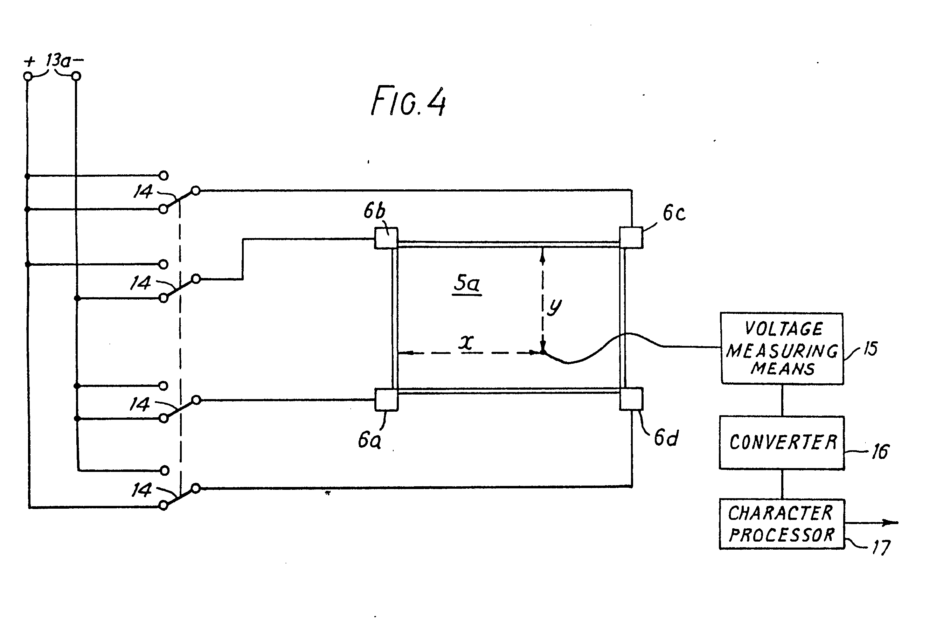

An electrical switching circuit as shown in Fig 4 is provided whereby an electrical voltage is connected alternately between the connectors 6a, 6b and the voltage measuring means on the one hand and the connectors 6c, 6d and the voltage measuring means on the other hand. By means of these connections current is caused to flow through the resistive layer first in one direction and then through the resistive layer in another direction, preferably at right angles to the first direction.

The writing pad so described constitutes a two dimensional potentiometer by virtue of the alternate electrical connections between the connectors 6b, 6c on the one hand and 6a, 6d on the other hand to make one electrical connection and also between the connectors 6b, 6a on the one hand and 6c, 6d on the other hand to provide alternately generated voltages across the writing pad so that when an electric connection is made between the layer 11a and the main coating layer 5a, a voltage is applied to the layer 5a representative of the co-ordinates of the point of contact between the sheets 11a and 5a.

The circuit diagram shown in Fig 4 includes a writing pad similar to the pad shown in Fig 1. An electric DC voltage supply is connected to positive and negative terminals 13a and the terminals are connected to switches 14 and thence to the connector leads to 6b, 6c, 6a and 6d. The switches are ganged together so the switches operate together and the switches are arranged so that the connector 6c is always connected to the positive supply and the connector 6a is always connected to the negative supply. Connectors 6b, 6d are alternately connected to the minus and the plus supply, that is in the switch down condition wherein the x co-ordinate is measured 6b is connected to the minus and 6d to the plus, while in the switch up condition, wherein the y co-ordinate is measured, 6b is connected to the plus and 6d to the minus.

A connection is made from the conducting layer on the leaf layer 11a to a voltage measuring means 15. This voltage measuring means is adapted to read the voltage applied across the resistive layer of the writing pad which is representative of a co-ordinate of a point x, y which is representative of the writing position. Thus, if a writing implement is recording a message on the writing pad at any time the position of the writing implement may be represented by two voltages. The voltage measuring means 15 is connected to an A/D converter 16 and character processor 17 arranged to recognise characters in accordance with the changes in the voltages corresponding to the distances x and y hereinbefore referred to.

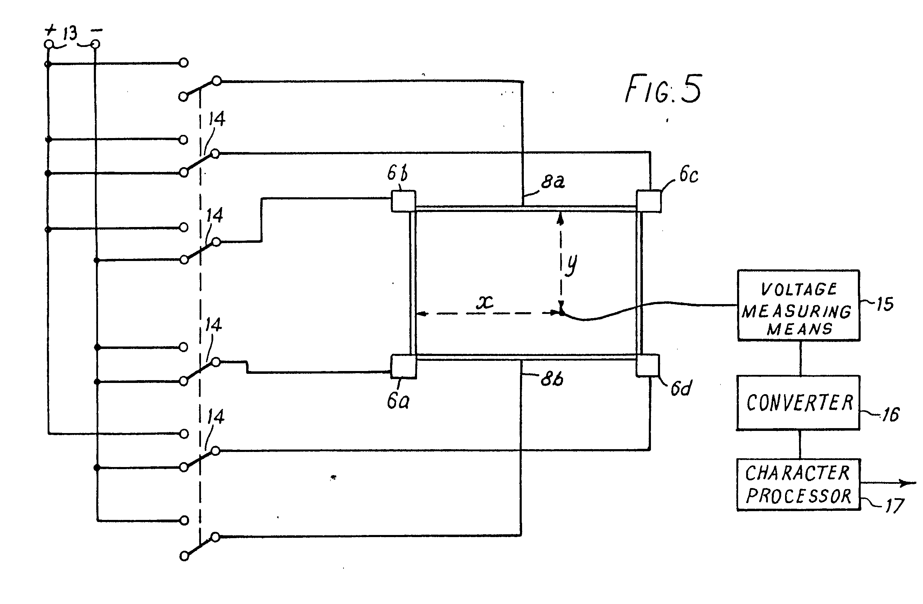

Fig 5 shows a view similar to Fig 4 except that there is additionally included the connecting leads 8a, 8b positioned between the connector leads 6b, 6c and 6a, 6d respectively. The purpose of the electrode 8a is to reduce the error caused by the small current in the leg of the border between the corners 3c of the connectors 6b and 6c during the condition wherein 6b and 6c are connected to the same supply polarity. (Likewise for electrode 8b with with respect to the border leg between corners 6a and 6d). These electrodes 8a, 8b are in the up/down condition (y coordinate measured) connected to the positive and negative terminals respectively and in the left/right (x co-ordinate measured) condition are connected to open circuit. As in the circuit shown in Fig 4 the positive and negative terminals are connected through ganged switches to the connectors 6a, 6b, 6c, 6d. 8a, 8b of the writing pad and through the writing pad to the voltage measuring means 15 and to the converter 16, and character processor 17.

If desired intermediate electrodes are provided on the shorter side edges of the pad and more than one intermediate electrode may be provided along the longer side edges of the pad.

Although we have shown the ganged switches as being of the mechanical kind these switches can be electronic switches.

Referring to the circuit shown in Fig 6 there is shown a writing pad having the layer of resistive material 5a and the border layer 4 with connectors 6.

An electric supply 18 comprising two leads, one a positive supply lead at a potential of 5 volts and the other lead at a potential of 2 volts are connected through a switch 19 to an operational amplifier 20.

The switch 19 is arranged to supply a selected one of the voltages from the supply 18 to one of the inputs 20a of the operational amplifier 20. The output 20c of the operational amplifier 20 is connected to a transistor amplifier circuit 21 comprising a pair of alternately operating transistors 22a, 22b. One of the transistors 22a is a pnp transistor and the transistor 22b is a npn transistor. The output from the operational amplifier 20 is connected to the respective base connections of each one of the transistors 22a. 22b. The collector of the transistor 22a is connected to a zero volts supply and the collector of transistor 22b is connected to a positive 10 volts supply. The emitters of the transistors 22c. 22b are connected together and are connected to one of the corners of one of the connecting electrodes (as shown as area 3c on Figs 2 and 3). A connection is made from a point contact on the inner side of the electrode 3c to the alternative input 20b of the operational amplifier 20. A smoothing circuit 23 is included in the connection between the electrode 3c and the operational amplifier 20, and this connection serves as a feed back circuit to ensure that the voltage supplied to the electrode 3c remains constant and exactly equal to the reference voltage (shown as +5 or +2 volts).

Referring to Fig 7 there is shown a modified form of pad. This pad has a base sheet, with a layer of resistive material 5a printed on it and having a border layer 4 and connecting electrodes 6. In this pad the lines constituting the border layer 4 between adjacent connecting electrodes 3c are each of parabolic shape. In the case of electrodes spaced 20.3 cms apart the depth of the parabola is 0.51 cms.

## Claims

1. A writing pad for character recognition apparatus comprising a highly resistive layer (5a) and a conductive layer (11a) separated from one another by a cushion sheet (12) of insulating material but which layers can be brought into electrical contact with each other under writing pressure by a writing implement upon the writing pad, wherein the high resistivity layer (5a) is surrounded by and connected to a continuous border (4) of different resistivity, a plurality of connector areas (3c) of low resistivity serving to connect the border (4) to an external switching circuit, characterised in that the resistivity of the continuous border (4) is lower than that of the high resistivity layer (5a) and in that a plurality of further areas of high resistivity (5b) are disposed around the border (4), these further areas of high resistivity (5b) being so selectively connected to the border (4) and having such resistance values that the voltage gradients along the length and the width of the high resistivity layer (5a) are substantially linear.

2. A writing pad according to Claim 1 characterised in that the border (4) is connected to the areas of high resistivity (5b) by connector lines (10b, 10c) which are selectively interrupted to provide the linear voltage gradient.

3. A writing pad according to Claim 1 and 2 characterised in that the connector lines (10b, 10c) extend in opposite directions from a central connector part (10a) with adjacent parallel lines connected to different adjacent connector parts.

4. A writing pad according to any one of the preceding claims characterised in that the high resistivity layer (5a) and the high resistivity areas (5b) are each part of a single coating layer printed on a base board (1).

5. A writing pad according to Claim 4 characterised in that the high resistivity layer (5a) is printed from an ink comprising conducting material (preferably carbon or silver), a resin, a plasticizer and a solvent and has an overlayer of similar constitution with a smaller proportion of conducting material.

## Patentanprüche

1. Schreibtafel für ein Zeichenerkennungsgerät mit einer Schicht (5a) von hohem spezifischem Widerstand und einer elektrisch leitfähien Schicht (11a), die voneinander durch eine dämpfende Zwischenplatte (12) aus Isoliermaterial getrennt sind, jedoch bei von einem Schreibgerät auf die Schreibtafel ausgeübtem Schreibdruck in gegenseitige elektrische Berührung gebracht werden können, bei welcher die mit hohem spezifischem Widerstand behaftete Schicht (5a) von einem durchgehenden Rand (4) von verschiedenem spezifischem Widerstand umgeben und mit ihm verbunden ist, wobei eine Vielzahl von Anschlußzonen (3c) geringen spezifischen Widerstandes zum Verbinden des Randes (4) mit einem externen Umschaltschaltung dienen, dadurch gekennzeichnet, daß der spezifische Widerstand des duchgehenden Randes (4) geringer ist als derjenige der mit hohem spezifischem Wideratand behafteten Schicht (5a), und daß eine Vielzahl weiterer Zonen (5b) von hohem spezifischem Widerstand um den Rand (4) angeordnet sind, die je nach Bedarf so mit dem Rand (4) verbunden werden und solche Widerstandswerte besitzen, daß die Spannungsgefälle in der Länge und der Breite der Schicht (5a) von hohem spezifischem Widerstand im wesentlichen linear sind.

2. Schreibtafel nach Anspruch 1, dadurch gekennzeichnet, daß der Rand (4) mit den Zonen hohen spezifischen Widerstands (5b) durch Anschlußleitungen (10b, 10c) verbunden ist, welche nach Bedarf unterbrochen sind, um das lineare Spannungsgefälle zu schaffen.

3. Schreibtafel nach Anspruch 1 und 2, dadurch gekennzeichnet, daß die Anschlußleitungen (10b, 10c) von einem zentralen Anschlußteil (10a) aus in entgegengesetzten Richtungen sich erstrecken, wobei benachbarte parallele Leitungen mit verschiedenen benachbarten Anschlußteilen verbunden sind.

4. Schreibtafel nach einem der vorhergehenden Ansprüche, dadurch gekennzeichnet, daß die Schicht (5a) von hohem spezifischem Widerstand und die Zonen (5b) von hohem spezifischem Widerstand je Teil einer einzelnen Überzugsschicht sind, die auf eine Grundplatte (1) aufgedruckt ist.

5. Schreibtafel nach Anspruch 4, dadurch gekennzeichnet, daß die Schicht (5a) von hohem spezifischem Widerstand mit einer Tinte gedruckt ist, welche elektrisch leitfähiges Material (vorzugsweise Kohle oder Silber), ein Harz, einen Weichmacher und ein Lösungsmittel enthält, und eine Deckschicht von ähnlichem Aufbau mit einem kleineren Anteil an elektrisch leitfähigem Material hat.

## Revendications

1. Support d'écriture pour appareil de reconnaissance de caractères comprenant une couche (5a) à résistance élevée et une couche conductrice (11a) séparées l'une de l'autre par une feuille tampon (12) en matière isolante mais ces couches pouvant être amenées en contact électrique l'une avec l'autre sous une pression d'écriture exercée par un outil à écrire sur le support, dans lequel la couche à résistance élevée (5a) est entourée par une bordure continue (4) ayant une résistance différente, et reliée à celle-ci, une pluralité de régions de liaison (3c) à faible résistance servant à relier la bordure (4) à un circuit extérieur de commutation, caractérisé en ce que la résistance de la bordure continue (4) est inférieure à celle de la couche (5a) à résistance élevée et en ce que plusieurs autres régions à résistance élevée (5b) sont disposées autour de la bordure (4), ces autres régions (5b) à résistance élevée étant reliées sélectivement à la bordure (4) et ayant des valeurs de résistance telles que les gradients de tension suivant la longueur et la lageur de la couche (5a) à résistance élevée sont sensiblement linéaires.

2. Support d'écriture suivant la revendication 1, caractérisé en ce que la bordure (4) est reliée aux régions (5b) à résistance élevée par des lignes de liaison (10b, 10c) qui sont interrompues sélectivement pour fournir le gradient de tension linéaire.

3. Support d'écriture suivant les revendications 1 et 2, caractérisé en ce que les lignes de liaison (10b, 10c) s'étendent dans des directions opposées à partir d'une partie centrale de liaison (10a) des lignes parallèles adjacentes étant reliées à des parties de liaison, adjacentes différentes.

4. Support d'écriture suivant l'une quelconque des revendications précédentes, caractérisé en ce que la couche (5a) à résistance élevée et les régions (5b) à résistance élevée font chacune partie d'une couche de revêtement unique imprimée sur une plaque de base (1).

5. Support d'écriture suivant la revendication 4, caractérisé en ce que la couche (5a) à résistance élevée est imprimée au moyen d'une encre comprenant une matière conductrice (de préférence carbone ou argent), une résine, un plastifiant et un solvant, et comporte une couche de recouvrement de constitution analogue avec une proportion plus faible de matière conductrice.

# FIG. 1

FIG. 2

2

FIG.3

EP 0 032 013 B1

FIG.4

+ 13a —

14

14

6b          6c

5a

y

x

14          6a          6d

14

VOLTAGE
MEASURING    15
MEANS

CONVERTER    16

CHARACTER
PROCESSOR
17

EP 0 032 013 B1

FIG.5

EP 0 032 013 B1

FIG.6

FIG.7

6